# EUROPEAN PATENT APPLICATION

(11) **EP 1 662 802 A1**
(43) Date of publication of application: **31.05.2006**
(21) Application number: 04772714.4
(22) Date of filing: 27.08.2004
(51) Int. Cl.: H04N 7/32

(54) **MOVING PICTURE ENCODING METHOD AND MOVING PICTURE DECODING METHOD**

(30) Priority: 01.09.2003 EP 03019871; 01.09.2003 EP 03019872
(71) Applicant: MATSUSHITA ELECTRIC INDUSTRIAL CO., LTD., Kadoma-shi, Osaka 571-8501 (JP)
(72) Inventor: SCHLOCKERMANN, Martin, / (JP); WEDI, Thomas, / (JP); WITTMANN, Steffen, / (JP); KADONO, Shinya, / (JP); KONDO, Satoshi, / (JP); SASAI, Hisao, / (JP)
(74) Representative: Grünecker, Kinkeldey, Stockmair & Schwanhäusser Anwaltssozietät
(86) International application number: PCT/JP2004/012765
(87) International publication number: WO 2005/022921

(57) **Abstract**

A moving picture coding apparatus (100) includes a coding unit (110) that generates a coded stream by coding inputted pictures and a film grain coding unit (130) that codes a representative pattern by selecting film grain components equivalent to at least one macro block and regarding the film grains as a representative pattern. On the other hand, a moving picture decoding apparatus (200) includes a decoding unit (210) that generates decoded picture data by decoding the coded stream and a film grain preparation unit (230) that prepares a superimposition pattern based on the representative pattern and additional information, and a synthesizing unit (240) that synthesizes the decoded picture data with the superimposition pattern.

## Description

### Technical Field

The present invention relates to a moving picture coding method for coding pictures constituting a moving picture on a block-by-block basis and a moving picture decoding method for decoding the coded stream.

### Background Art

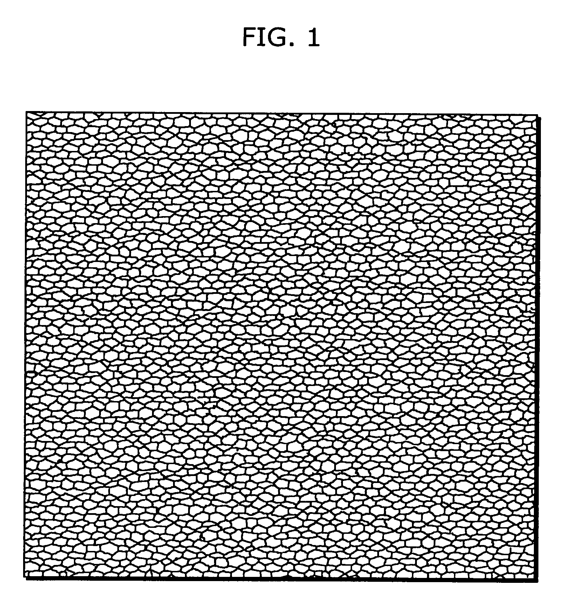

Film moving picture is made of silver halide crystals that are dispersed in photographic emulsion of the film. The respective pictures that are stored in such a photographic film are generated by exposing and developing the silver halide crystals. In the case of color moving pictures, silver is chemically removed after the development. However, the structure of a silver crystal remains as small grains of dye even after the development. Since, silver crystals are formed randomly in emulsion, the grains are formed randomly and dispersed in the respective pictures. Such a recognizable grain structure is called film grain, and FIG. 1 shows an example of such a grain structure.

A viewer of a moving picture that is being reproduced cannot recognize each of the grains that has a size of about 0.002 mm down to about a tenth of that size. However, the viewer can recognize groups of grains and recognize that it is film grains.

As the resolution of the generated pictures is increased, the recognition level of the film grains also increases. Especially, in the case of reproducing cinema or a high-definition moving picture, such film grains are clearly recognizable. On the other hand, in the case of using a standard or smaller television as a display, such film grains are not conspicuous so much.

By the way, applications where moving pictures are used are on the increase, such applications ranging from TV phone communication, a TV conference, a Digital Versatile Disk (DVD), to digital television. When sending and recording moving pictures, a large amount of data must be sent via a conventional communication channel whose frequency band is limited, and such data must be stored in a conventional storage medium whose capacity is limited. Compressing digital data is essential for sending and storing digital data using a conventional channel and a medium.

In order to compress moving picture data, a number of moving picture coding standards have developed. Examples are: (a) a series of H. 26x of the ITU-T (the International Telecommunication Standard); (b) a series of MPEGx of the ISO (the International Organization for Standardization)/IEC (the International Electrotechnical Commission). The latest and most-developed video coding standard is the one called H. 264 or MPEG4 AVC.

The approach for coding that becomes a basis of those standards is made mainly using the following steps. First, pictures are segmented into blocks so that the data of the respective pictures constituting a moving picture can be compressed on a block-by-block basis, a block being a group of pixels. Next, the respective blocks of moving picture data are transformed from spatial areas to frequency areas, the obtained transform coefficients are quantized, and then entropy coding is performed on the quantized transform coefficients so that spatial redundancy of the respective pictures can be reduced. Further, using other picture blocks that are in a time relationship, the variation from other pictures are coded. This coding is performed using motion estimation and compensation technique.

Among various moving picture compression technique, the so-called hybrid coding technique is known as the most effective coding technique. The hybrid coding technique is a hybrid of time and spatial compression technique and a statistical coding. Here, technique of motion compensation, Discrete Cosine Transform (DCT), quantization of DCT coefficients, variable length coding (VLC) is used. The motion compensation is for determining a motion between current picture and a coded picture, estimating the current picture based on the determined motion, and generating a differential picture indicating the difference between the current picture and the prediction picture.

In the case of performing coding using a lowered bit rate in the motion picture compression like this, film grains are removed, resulting in causing a problem that such film grains damage a unique video quality. Generally, high-frequency components of a picture are removed in order to reduce data amount in moving picture compression. Since such film grains are high-definition components and high-frequency component signals, they are removed in compression processing.

Here is conceived a method for processing film grain information separately from the contents of pictures. In the method, the film grain information is removed from a video sequence, the film grain information is parameterized based on a predetermined film grain model, and such statistical film grain parameters are sent to be added to the coded moving picture data. Such film grain parameters can be sent in a form of SEI (Supplemental Enhancement Information) in the MPEG4 AVC. In the SEI mode in the present moving picture coding standard, additional information of a bit stream to be sent is included in order to provide a display capability in the coded pictures. At present, SEI information provides picture freeze, picture snapshot, video segmentation, progressive refinement and keying. An object of these options is to provide functions in a decoder that has a support function and in a bit stream.

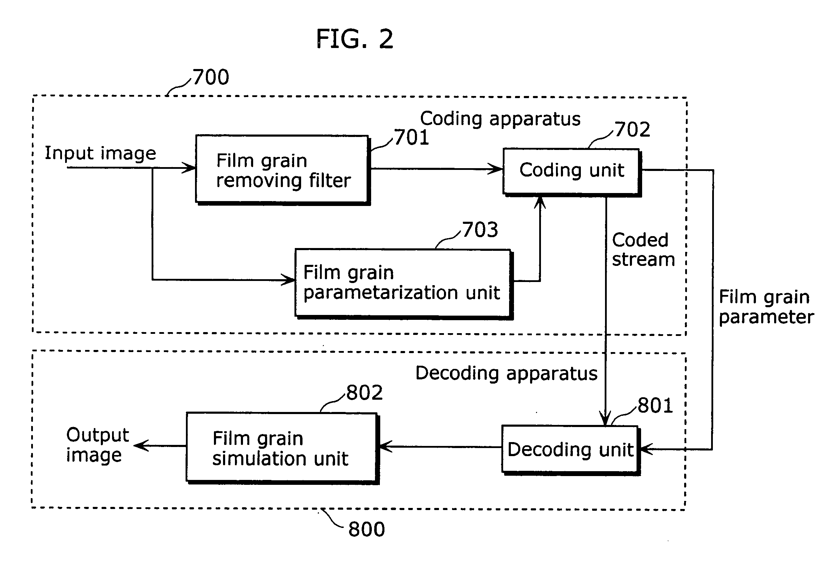

FIG. 2 is a block diagram indicating the outline of sending film grain parameters. The moving picture data inputted in a coding apparatus 700 are sent to the film grain removing filter 701, and such film grains are removed from the moving picture data. A coding unit 702 performs a standard moving picture coding process on the moving picture data from which film grains have been removed. The coded moving picture data is sent to the corresponding decoding apparatus 800 as a coded data stream.

Here, the film grain removing filter 701 is realized by a motion compensated temporal median filter. Since the film grain has a random structure, it can be easily removed from a picture sequence using a temporal median filter unless it moves. In the case of a video sequence including motion in the contents of pictures, a higher level approach must be made. Therefore, the temporal median filter follows the motion from picture to picture, performs filtering on the contents of each picture, and removes film grains.

The moving picture data from which film grain information is extracted is coded according to one of existing moving picture coding standards. Film grain information is sent to the film grain parameterization unit 703, and the film grains are parameterized according to a statistical model.

It is possible to perform color conversion and/or pixel interpolation, using an original signal format, concurrently parameterizing these film grains. As a typical example, film grain is modelled in RGB color space in order to approximate the color configuration in photographic film. Or, monochrome film grains can be added to Y components (brightness components) in YUV color space.

A simple method for parameterizing such film grains is to process such film grains as Gaussian noises added to picture signals. In a film grain parameterization model with higher fidelity, there is a need to send different parameters for each color component and/or for each grain level set.

The resulting film grain parameters are included in the moving picture in a form of SEI message and sent.

The coded video data and the SEI message including film grain parameters are sent to a decoding apparatus 800. The decoding apparatus 800 includes a decoding unit 801 that decodes coded moving picture data and a film grain simulation unit 802. The film grain simulation unit 802 generates film grains according to the received film grain parameters, and adds the generated film grains to the decoded moving picture data. In this way, it is possible to reproduce moving picture data on which film grains are superimposed.

The film grain simulation is performed at completely decoding apparatus 800 side. The film grain simulation depends on a predetermined model for reproducing film grains on a predetermined virgin film. Otherwise, the film grain simulation is performed by parameterizing a configurable model. Also, the film grain simulation is performed after the moving picture data is decoded and before the moving picture data is displayed.

The drawback of this method is that film grain information must be standardized according to a known statistical film grain model in order to obtain respective parameters. Therefore, only film grains that are true of a standard statistical film grain model can be coded appropriately so that they can be correctly decoded and reproduced and then sent.

A conventional film grain removing method like this requires high-level calculation and complicated hardware especially because of motion compensation filtering.

Also, another moving picture coding method and moving picture decoding method has proposed (for example, refer to Japanese Laid-Open Patent Application No. 8-79765). In the method, noise amount included in pictures are detected when coding moving pictures, a flag indicating the noise amount is coded and transmitted, the bit stream is decoded, and then white noises are added according to the flag.

However, in the moving picture coding method and the moving picture decoding method, white noises are added uniformly according to the flag indicating the noise amount that have been removed using a pre-filter, and the methods entail a problem that the reproducibility of pictures is made low.

Also, in the case of coding fine pictures that have parts where a lot of high-frequency components are used, for example, parts of green trees, in a lowered bit rate, such high-frequency components are removed together with such film grains, and the methods entail a problem that fine parts cannot be reproduced.

### Disclosure of Invention

Therefore, the present invention is conceived considering the above-mentioned situation. An object of the present invention is to provide a moving picture coding method and a moving picture decoding method that can improve the reproducibility by recovering the parts where a lot of film grains and high-frequency components are included even when using a low bit rate.

In order to achieve the above-mentioned object, the moving picture coding method in the present invention is for coding each picture constituting a moving picture on a block-by-block basis and includes: a first coding step of coding a current picture to be coded; an extraction step of extracting high-definition components from the current picture to be coded; and a selection step of selecting high-definition components equivalent to at least one block, from the high-definition components extracted in the extraction step.

Here, in a first aspect of the present invention, it is preferable that the moving picture coding method further includes a second coding step for coding the high-definition components equivalent to the at least one block, the high-definition components being selected in the selection step.

Also, the moving picture decoding method in the present invention is for decoding a coded moving picture whose pictures that has been coded on a block-by-block basis. It includes a first decoding step of decoding the coded moving picture and generating decoded picture data, an obtainment step of obtaining high-definition components equivalent to at least one block, and a superimposition step of superimposing, on the decoded picture data, the high-definition components equivalent to the at least one block that has been obtained by the obtainment step.

Note that, here in the high-definition components, film grain components are included.

In this way, even in the case where inputted pictures are coded using a low bit rate, it is possible to improve the reproducibility by recovering the high-definition components. Also, it is possible to improve later the picture quality of the coded stream that is sent using a low bit rate.

Further, the present invention can be realized not only as a moving picture coding method and a moving picture decoding method like this, but also as a moving picture coding apparatus and a moving picture decoding apparatus that are equipped with units corresponding to the unique steps included in the moving picture coding method and the moving picture decoding method like this, and as a program causing a computer to execute these steps. Also, the program like this can be distributed through a recording medium such as a CD-ROM and a communication medium such as the Internet.

As clear from the above-mentioned description, with the moving picture coding method and a moving picture decoding method in the present invention, it becomes possible to improve the reproducibility by recovering the high-definition components even in the case where the inputted pictures are coded in a low bit rate. Also, it becomes possible to improve the picture quality of the coded stream that has been sent in a low bit rate later.

### Brief Description of Drawings

FIG. 1 is a schematic diagram showing a structure of film grains.
FIG. 2 is a block diagram showing the outline of sending film grain parameters.
FIG. 3 is a block diagram showing the overall configuration of a moving picture coding apparatus and a moving picture decoding apparatus in which the moving picture coding method and the moving picture decoding method in a first embodiment of the present invention are used.
FIG. 4 is a block diagram showing the structure of the coding unit in the moving picture coding apparatus.
FIG. 5 is a block diagram showing the structure of the film grain coding unit of the moving picture coding apparatus.
FIG. 6A is a block diagram showing a first structural example of the selection unit in the film grain coding unit.
FIG. 6B and FIG. 6C are diagrams showing examples of histograms respectively.
FIG. 7 is a block diagram showing a second structural example of the selection unit in the film grain coding unit.
FIG. 8A is a block diagram showing a third structural example of the selection unit in the film grain coding unit.
FIG. 8B is a diagram showing an example of pixel values of each segmented macro blocks.
FIG. 8C is a diagram showing an example of film grain components for one macro block that have been obtained from the calculation performed by a median calculation unit.
FIG. 9A is a diagram showing an example of film grain components for one macro block.
FIG. 9B is a diagram showing an example of components outputted by a variable length coding unit.
FIG. 10 is a flow chart showing the operation performed by the moving picture coding apparatus.
FIG. 11 is a block diagram showing the structure of a decoding unit of the moving picture decoding apparatus.
FIG. 12 is a block diagram showing the first structural example of the film grain preparation unit.
FIG. 13A to FIG. 13H are diagrams showing examples of modification patterns respectively.
FIG. 14A to FIG. 14C are diagrams showing examples of modification patterns respectively.
FIG. 15 is a block diagram showing a second structural example of the film grain preparation unit.
FIG. 16 is a diagram showing the example where the synthesizing unit synthesizes decoded picture data with superimposition patterns.
FIG. 17 is a flow chart showing the operation performed by the moving picture decoding apparatus.
FIG. 18 is a block diagram showing the structures of the coding unit and the film grain coding unit of the moving picture coding apparatus in a second embodiment of the present invention.
FIG. 19 is a block diagram showing the structure of the decoding unit of the moving picture decoding apparatus in the second embodiment of the present invention.
FIG. 20 is a block diagram showing the first structural example of the film grain preparation unit.
FIG. 21 is a block diagram showing the second structural example of the film grain preparation unit.
FIG. 22 is a block diagram showing the overall configuration of the moving picture coding apparatus and the moving picture decoding apparatus where the moving picture coding method and the moving picture decoding method in a third embodiment of the present invention are used.
FIG. 23 is a block diagram showing the structure of the moving picture decoding apparatus in a fourth embodiment of the present invention.
FIG. 24A to FIG. 24C are illustrations concerning a recording medium for storing a program causing a computer system to realize the moving picture coding method and the moving picture decoding method in the respective embodiments.

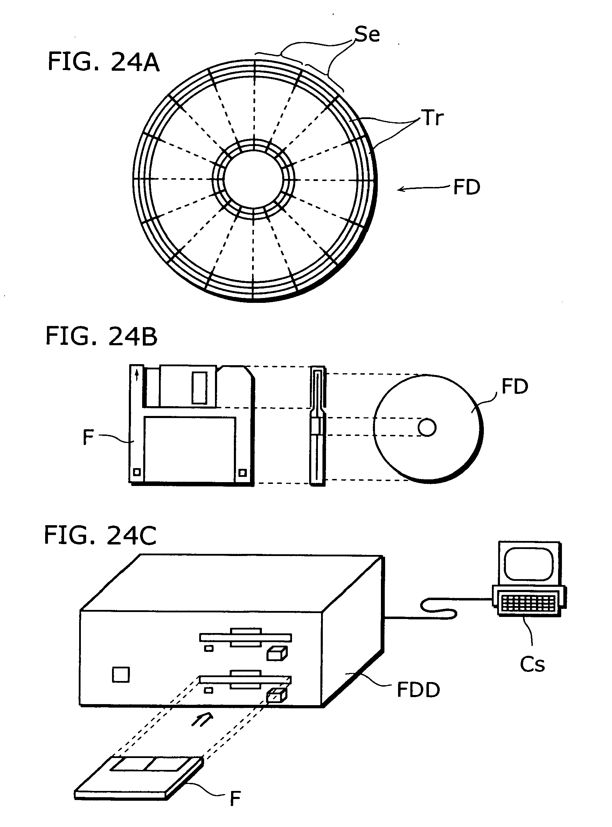

FIG. 24A is an illustration showing an example of a physical format of a flexible disc that is a recording medium.
FIG. 24B is an illustration of the front view and the side view of the case of the flexible disc and the front view of the flexible disc body.
FIG. 24C is an illustration showing the structure for recording and reproducing the above-described program on the flexible disc FD.

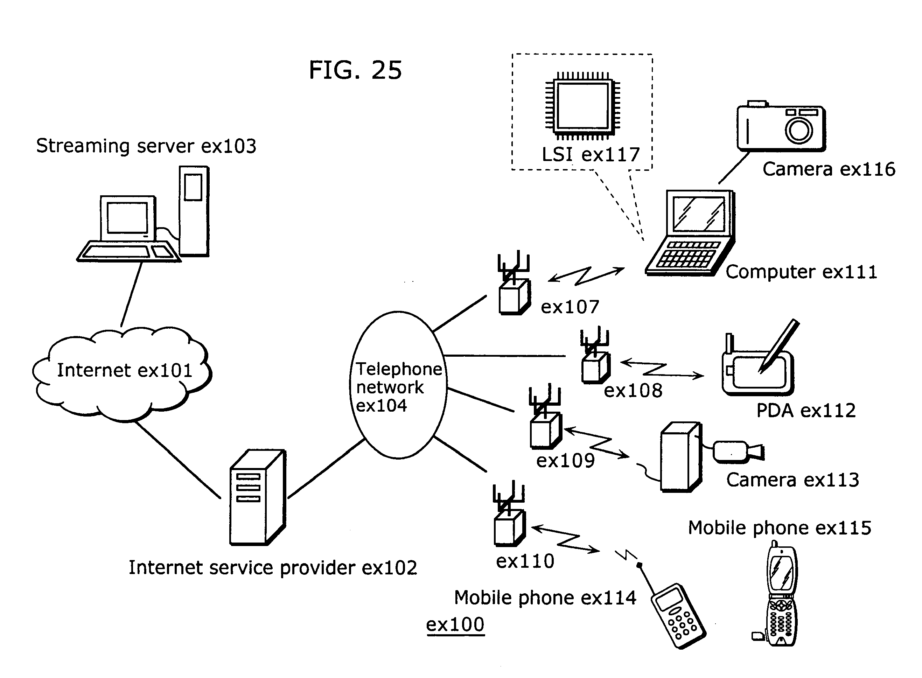

FIG. 25 is an illustration showing the overall configuration of the content supply system that realizes a content distribution service.

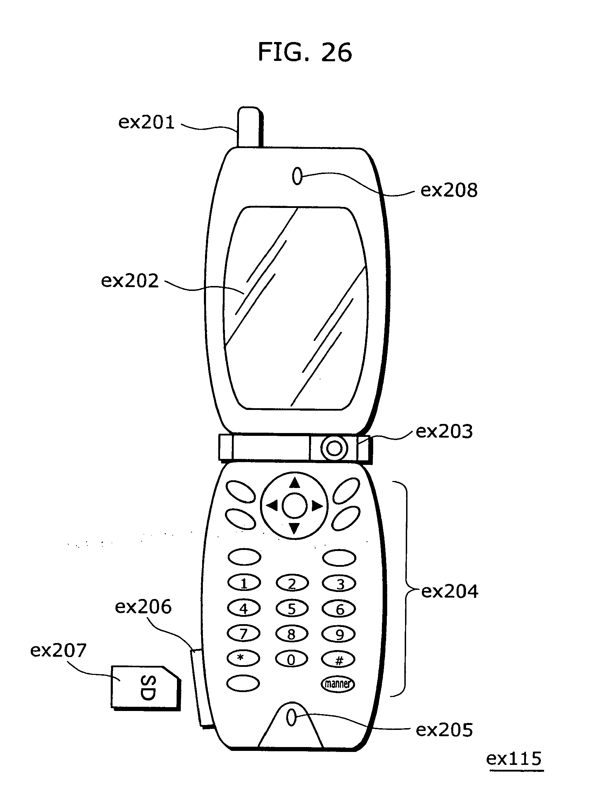

FIG. 26 is an illustration showing an example of a mobile phone.

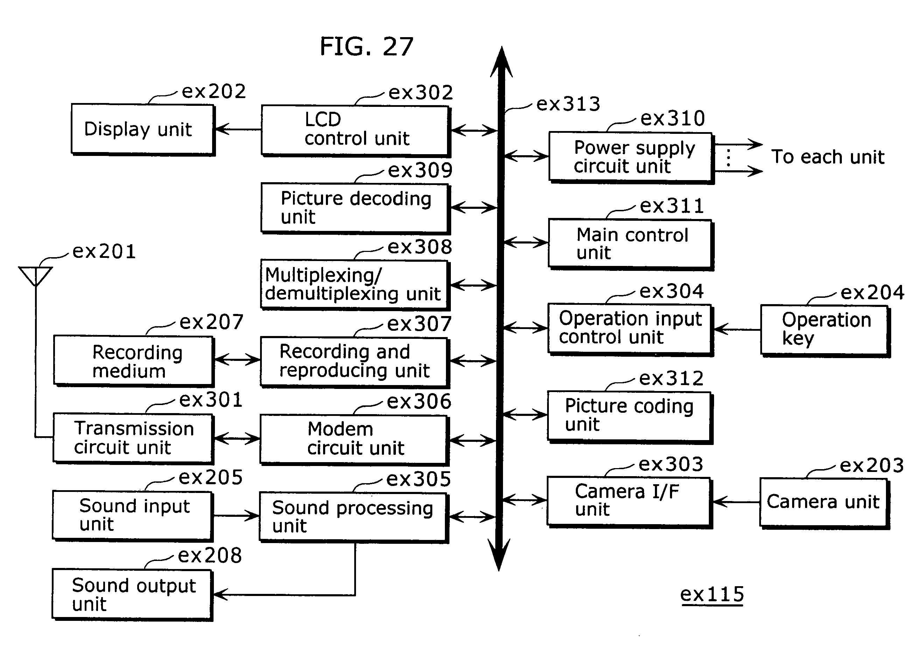

FIG. 27 is a block diagram showing the internal structure of the mobile phone.

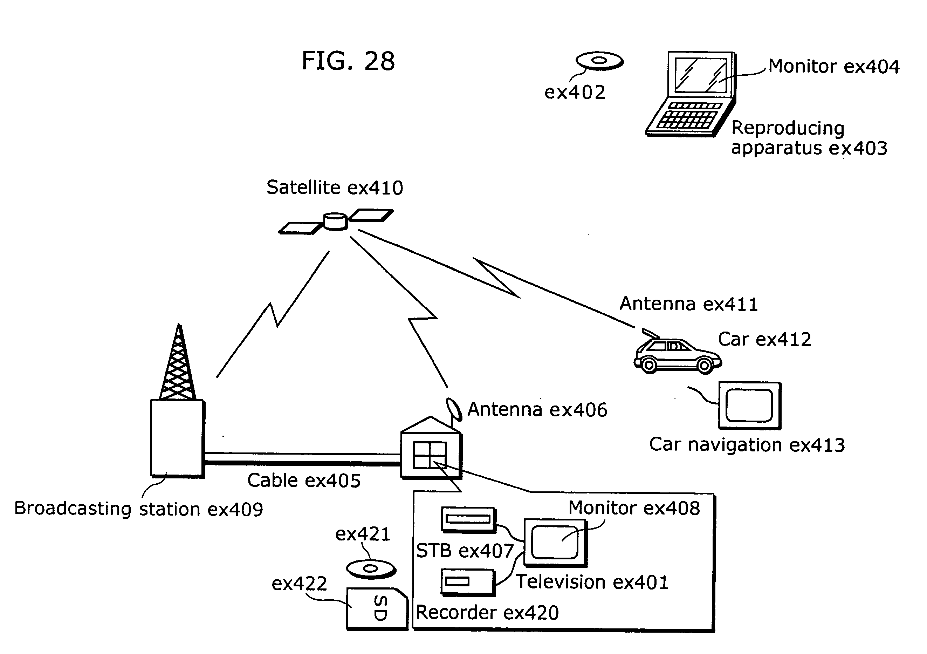

FIG. 28 is an illustration showing the overall configuration of a system for digital broadcasting.

### Best Mode for Carrying Out the Invention

Embodiments of the present invention will be described with reference to figures.

### (First Embodiment)

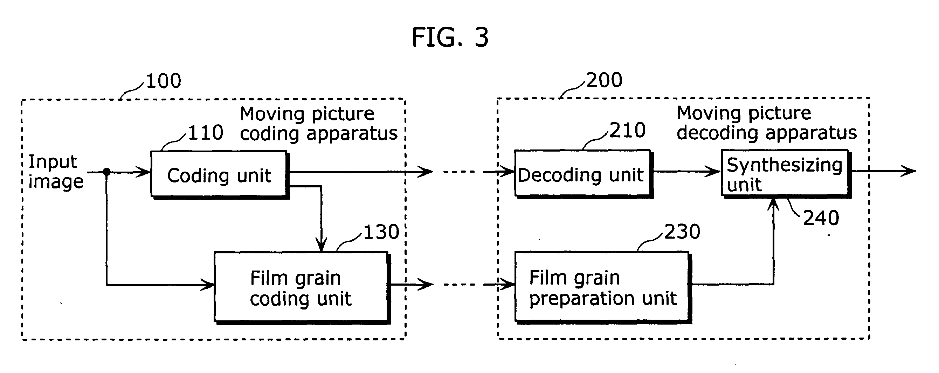

FIG. 3 is a block diagram showing the overall configuration of the moving picture coding apparatus and the moving picture decoding apparatus that use the moving picture coding method and the moving picture decoding method in a first embodiment of the present invention.

The moving picture coding apparatus 100 is for coding film grains separately from main pictures, and includes a coding unit 110 and a film grain coding unit 130 as shown in FIG. 3. On the other hand, the moving picture decoding apparatus 200 is for superimposing such film grains on decoded pictures, and includes a decoding unit 210, a film grain preparation unit 230 and a synthesizing unit 240 as shown in FIG. 3.

First, the moving picture coding apparatus 100 will be described.

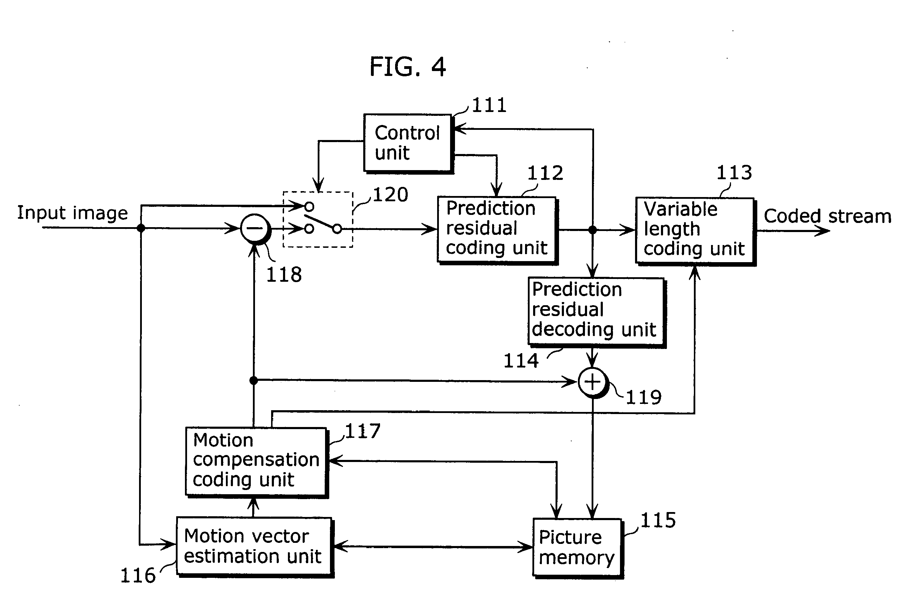

FIG. 4 is a block diagram showing the structure of the coding unit 110 of the moving picture coding apparatus 100.

The coding unit 110 includes a control unit 111, a prediction residual coding unit 112, a variable length coding unit 113, a prediction residual decoding unit 114, a picture memory 115, a motion vector estimation unit 116, a motion compensation coding unit 117, a differential calculation unit 118, an addition calculation unit 119 and a switch 120.

The motion vector estimation unit 116 estimates a motion vector that indicates an amount of motion to a position in an image area that is closest to an inputted image in an area to be searched in the picture by using the decoded image data after being coded as a reference picture.

The motion compensation coding unit 117 determines a coding mode of a block using the motion vector estimated by the motion vector estimation unit 116, and generates prediction image data based on this coding mode. This coding mode indicates how a macro block is to be coded.

The differential calculation unit 118 calculates the differential between the inputted input image data and the prediction image data inputted by the motion compensation coding unit 117, and generates prediction residual image data.

The prediction residual coding unit 112 performs coding including frequency transform such as DCT (discrete cosine transform) and quantization on the inputted prediction residual image data, and generates coded data. The variable length coding unit 113 performs variable length coding and the like on the inputted coded data, and further, generates a coded stream by adding the information on the motion vector and the information on the coding mode that are inputted by the motion compensation coding unit 117.

The control unit 111 controls a parameter in the quantization performed by the prediction residual coding unit 112, the switch 120 and the like.

The prediction residual decoding unit 114 performs decoding processing including inverse quantization and inverse frequency transform on the inputted coded data so as to generate decoded differential image data. The addition calculation unit 119 adds the decoded differential image data inputted by the prediction residual decoding unit 114 to the prediction image data inputted by the motion compensation coding unit 117 so as to generate the decoded image data. The picture memory 115 stores the generated decoded image data.

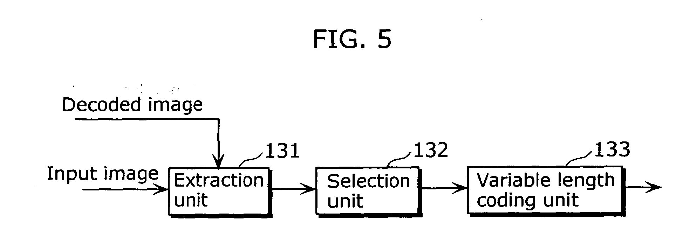

FIG. 5 is a block diagram showing the structure of the film grain coding unit 130 of the moving picture coding apparatus 100.

The film grain coding unit 130 includes an extraction unit 131, a selection unit 132 and a variable length coding unit 133 as shown in FIG. 5.

The extraction unit 131 calculates the differential between the inputted input image data and the decoded image data inputted by the addition calculation unit 119 so as to extract the film grain components.

The selection unit 132 segments the film grain components of the picture to be coded extracted by the extraction unit 131 into a macro block of, for example, 16 × 16 pixels, and selects film grain components equivalent to at least one macro block and outputs it as a representative pattern. Three structural examples of this selection unit 132 will be described below.

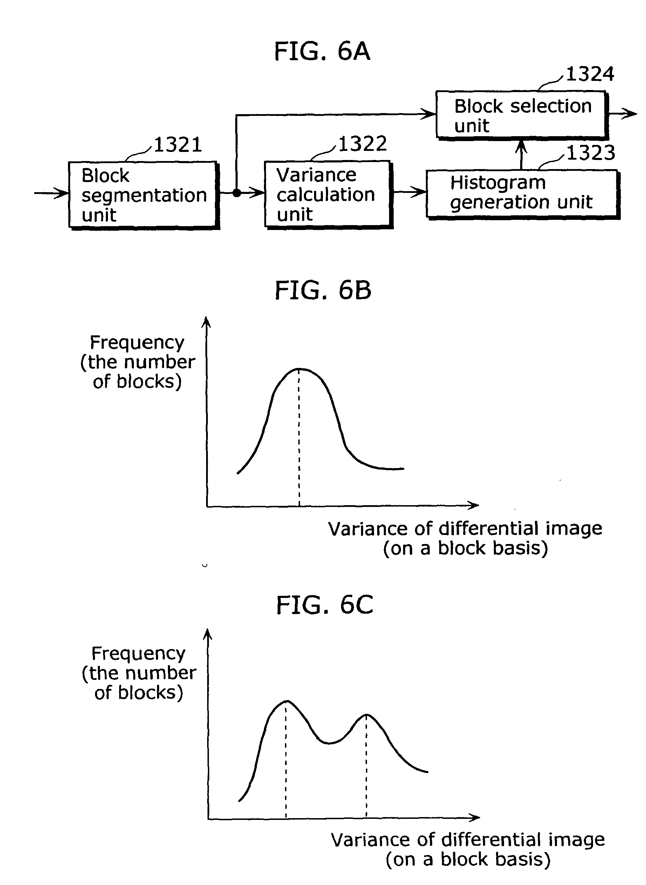

FIG. 6A is a block diagram showing a first structural example of the selection unit 132 of the film grain coding unit 130.

The selection unit 132 includes a block segmentation unit 1321, a variance calculation unit 1322, a histogram generation unit 1323 and a block selection unit 1324.

The block segmentation unit 1321 segments the film grain components of the picture to be coded that has been extracted by the extraction unit 131 into a macro block of, for example, 16 × 16 pixels.

The variance calculation unit 1322 calculates the variance for each macro block segmented by the block segmentation unit 1321, that is, the variance of the pixel value of each pixel constituting each macro block. This variance can be calculated using, for example, the following expression.

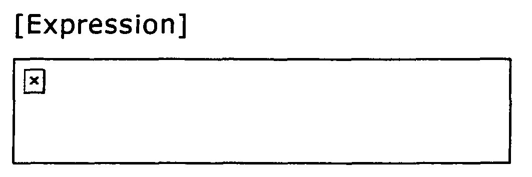

Here, "N" is the number of pixels constituting a macro block, and "x" is a pixel value of each pixel.

The histogram generation unit 1323 generates a histogram of the variance calculated by the variance calculation unit 1322 as shown in FIG. 6B, and notifies the block selection unit 1324 of which macro blocks have the variances respectively indicated by the frequency peaks in the histogram. Note that, since there are plural macro blocks, which have the variances respectively indicated by the frequency peaks in the histogram, plural macro blocks are notified to the block selection unit 1324.

The block selection unit 1324 selects a macro block from among macro blocks notified by the histogram generation unit 1323, and the film grain components of the macro block are outputted as a representative pattern. Here, the macro block to be selected may be any macro blocks notified by the block selection unit 1324.

Also, the block selection unit 1324 further specifies, as additional information, a permitted pattern in superimposition or a prohibited pattern in superimposition of the film grain components to be outputted. This permitted pattern or a prohibited pattern is specified for each picture or for each of the film grain components. This permitted pattern or a prohibited pattern will be described later in the description of the structure of the moving picture decoding apparatus.

Note that the histogram generation unit 1323 notifies the block selection unit 1324 of which macro blocks have two variances respectively, for example, in the case where there are two variances indicated by frequency peaks respectively in the generated histogram as shown in FIG. 6C. After that, the block selection unit 1324 selects each macro block that has one of the variances, that is, two macro blocks in total, and outputs the film grain components of the respective macro blocks as representative patterns.

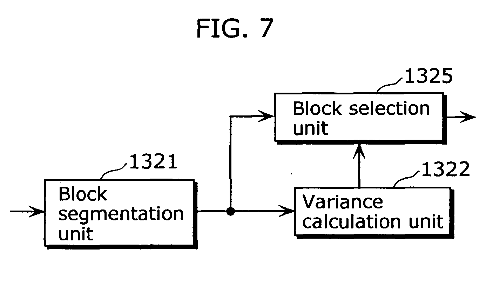

FIG. 7 is a block diagram showing a second structural example of the selection unit 132 of the film grain coding unit 130.

The selection unit 132 includes a block segmentation unit 1321, a variance calculation unit 1322, and a block selection unit 1325. Note that the block segmentation unit 1321 and the variance calculation unit 1322 are the same as the ones shown in FIG. 6A.

The block selection unit 1325 holds a variance that has been previously set. Also, the block selection unit 1325 selects a macro block, from among macro blocks, which has the same variance as a predetermined variance among the variances calculated by the variance calculation unit 1322, and outputs the film grain components of the macro block as a representative pattern.

Also, the block selection unit 1325 specifies, as additional information, a permitted pattern in superimposition or a prohibited pattern in superimposition of the film grain components to be outputted, likewise the block selection unit 1324 that is the above-described first structural example.

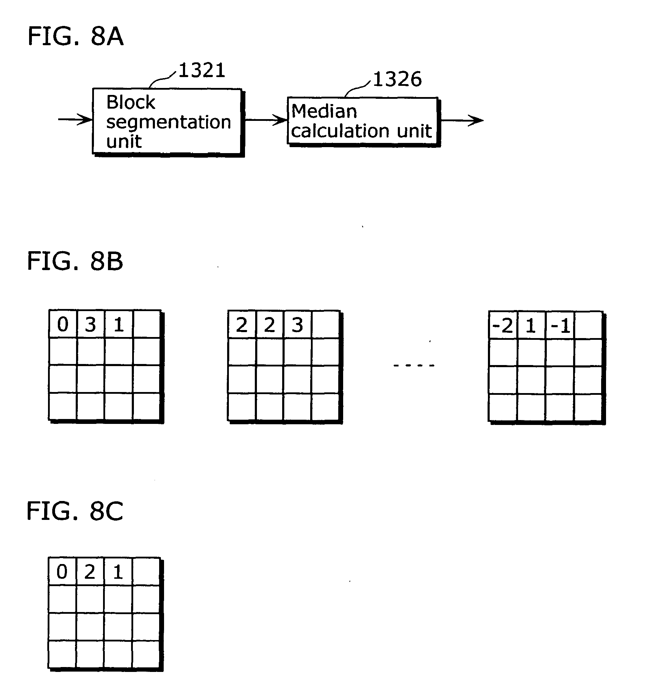

FIG. 8A is a block diagram showing a third structural example of the selection unit 132 of the film grain coding unit 130.

The selection unit 132 includes a block segmentation unit 1321 and a median calculation unit 1326. Note that the block segmentation unit 1321 is the same as the one shown in FIG. 6A.

The median calculation unit 1326 calculates a median of pixels in the respectively corresponding pixel positions of macro blocks segmented by the block segmentation unit 1321. In an example case of respective macro blocks segmented as shown in FIG. 8B (4 × 4 pixels in FIG. 8B), medians are calculated in the following sequence: first, the median of "0", "2",..., and "-2" that are the pixel values at the left corners; next, the median of "3", "2" ,..., and "1" that are pixel values of the right neighbors of the pixel values at the left corners; and next, the median of "1", "3" ,..., and "-1" that are the pixel values of the next right neighbors, and the other medians are calculated. After that, the median calculation unit 1326 outputs the calculated median of each pixel position as film grain components for one macro block. In other words, in the case of the above-described example, the film grain components that have pixel values of "0", "2", "1" ,..., is outputted as the representative pattern for one macro block, as shown in FIG. 8C.

Also, the median calculation unit 1326 specifies, as additional information, a permitted pattern in superimposition or a prohibited pattern in superimposition of the film grain components to be outputted, likewise the block selection unit 1324 that is the above-described first structural example.

Note that the above-described first structural example may be configured in a way that only the macro blocks whose variances are at a predetermined threshold or below among variances of the respective macro blocks calculated by the variance calculation unit 1322 are notified to the histogram generation unit 1323.

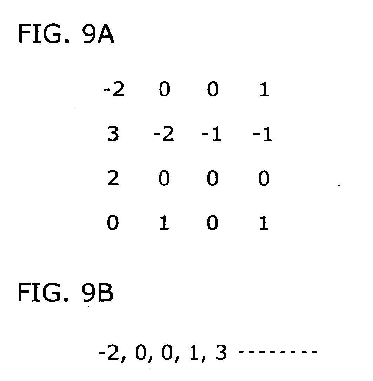

The variable length coding unit 133 codes the representative patterns outputted by the selection unit 132. For example, in the case where the pixel value of the image to be coded is represented in 8 bits, since the representative pattern outputted by the selection unit 132 is a differential value, it can be represented in 9 bits. For example, in the case where the film grain components for one macro block that is the representative pattern outputted by the selection unit 132 has components shown in FIG. 9A, the variable length coding unit 133 outputs the components shown in FIG. 9B in 9 bits as they are.

Note that the variable length coding unit 133 may perform frequency transform such as DCT (discrete cosine transform) on the representative pattern outputted by the selection unit 132 and code the coefficients. In this case, it is desirable that no quantization be performed so that the representative pattern can be completely reproduced, but quantization where a small quantization parameter is used may be performed.

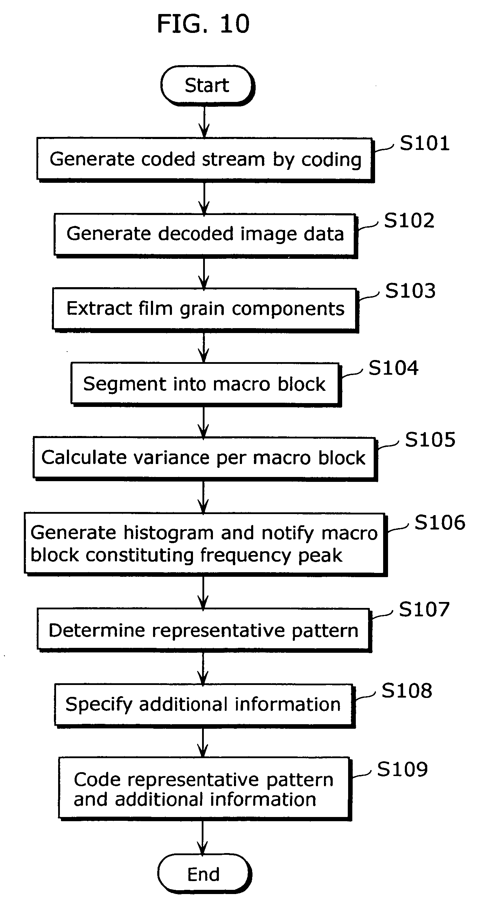

Next, the operation of the moving picture coding apparatus structured like above will be described. Here will be described the case where the selection unit 132 of the film grain coding unit 130 is the first structural example. FIG. 10 is a flow chart showing the operation performed by the moving picture coding apparatus in this case.

The images to be inputted are inputted to the coding unit 110 and the film grain coding unit 130 on a picture-by-picture basis in order. The coding unit 110 codes the pictures to be coded and generates a coded stream (Step 101). Also, the coding unit 110 generates decoded image data and outputs the data to the film grain coding unit 130 (Step 102). The extraction unit 131 of the film grain coding unit 130 calculates the differential between the inputted image data and the decoded image data inputted by the addition calculation unit 119 of the coding unit 110, and extracts the film grain components (Step 103).

The block segmentation unit 1321 segments the film grain components extracted by the extraction unit 131 into a macro block of, for example, 16 × 16 pixels (Step 104). Next, the variance calculation unit 1322 calculates the variance for each macro block segmented by the block segmentation unit 1321 (Step 105). The histogram generation unit 1323 generates a histogram of the variance calculated by the variance calculation unit 1322, and notifies the block selection unit 1324 of which macro block has the variance indicated by the frequency peak in the histogram (Step 106).

The block selection unit 1324 selects one macro block from among macro blocks notified by the histogram generation unit 1323, and outputs the film grain components of the macro block as a representative pattern (Step 107). Also, the block selection unit 1324 specifies, as additional information, a permitted pattern in super imposition or a prohibited pattern in superimposition corresponding to the representative pattern to be outputted (Step 108). Next, the variable length coding unit 133 codes the representative pattern outputted by the selection unit 132 and the additional information (Step 109). The coded representative pattern and additional information are sent in another coded stream separately from the coded stream generated by the coding unit 110. Note that the coded representative pattern and additional information can be sent as user data of the coded stream generated by the coding unit 110.

Next, the moving picture decoding apparatus 200 will be described.

The moving picture decoding apparatus 200 includes a decoding unit 210, a film grain preparation unit 230 and a synthesizing unit 240 as shown in FIG. 3 as described earlier.

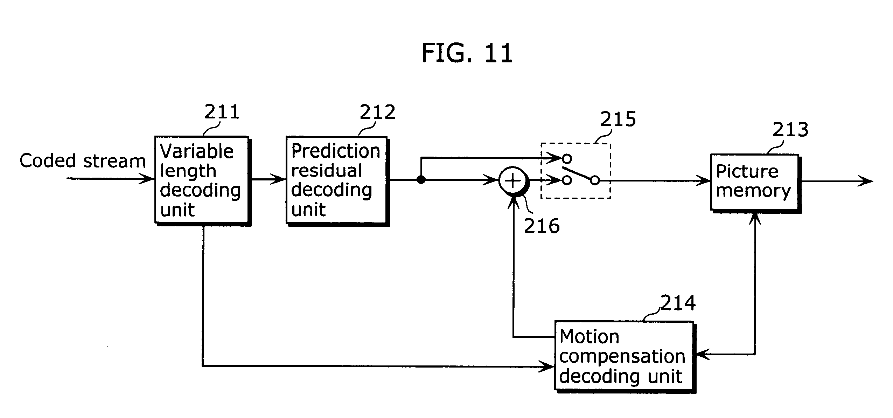

FIG. 11 is a block diagram showing the structure of the decoding unit 210 of the moving picture decoding apparatus 200.

The decoding unit 210 includes a variable length decoding unit 211, a prediction residual decoding unit 212, a picture memory 213, a motion compensation decoding unit 214, a switch 215 and addition calculation unit 216.

The variable length decoding unit 211 extracts, from the inputted coded stream, the information on a decoding mode and various data such as the information on the motion vector that has been used in coding. The prediction residual decoding unit 212 decodes the inputted prediction residual coded data, and generates prediction residual image data. The motion compensation decoding unit 214 generates motion compensation image data based on the information on the decoding mode and the information on the motion vector.

The addition calculation unit 216 adds the prediction residual image data inputted by the prediction residual decoding unit 212 to the motion compensation image data inputted by the motion compensation decoding unit 214, and generates the decoded image data. The picture memory 213 stores the generated decoded image data.

The film grain preparation unit 230 prepares a superimposition pattern based on the film grain components and the additional information sent by the moving picture coding apparatus 100. Two structural examples of this film grain preparation unit 230 will be described below.

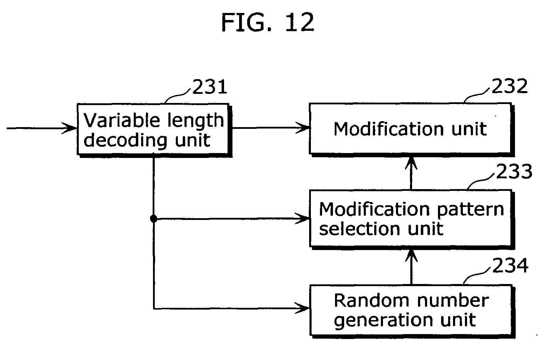

FIG. 12 is a block diagram showing the first structural example of the film grain preparation unit 230.

The film grain preparation unit 230 includes a variable length decoding unit 231, a modification unit 232, a modification pattern selection unit 233, and a random number generation unit 234.

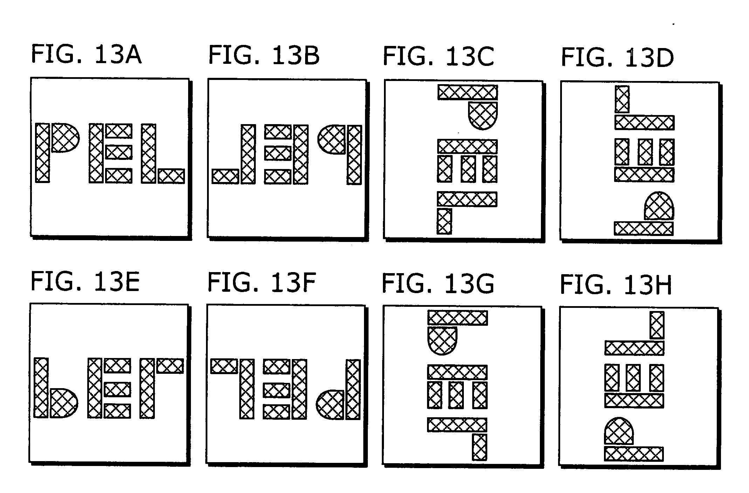

The variable length decoding unit 231 performs variable length decoding on the representative pattern and the additional information that have been coded by the moving picture coding apparatus 100 and sent. The random number generation unit 234 generates a modification pattern as to what modification the modification unit 232 makes, by generating a random number using a random function. For example, the following patterns are determined: (a) as it is (no modification is made on it) as shown in FIG.13A; (b) it is reversed as shown in FIG. 13B; (c) it is reversed and rotated to the right by 90 degrees as shown in FIG. 13C; (d) it is reversed and rotated to the right by 90 degrees as shown in FIG. 13D; (e) it is rotated by 180 degrees as shown in FIG. 13E; (f) it is reversed and rotated by 180 degrees as shown in FIG. 13F; (g) it is rotated to the left by 90 degrees as shown in FIG. 13G; and (h) it is reversed and rotated to the left by 90 degrees as shown in FIG. 13H.

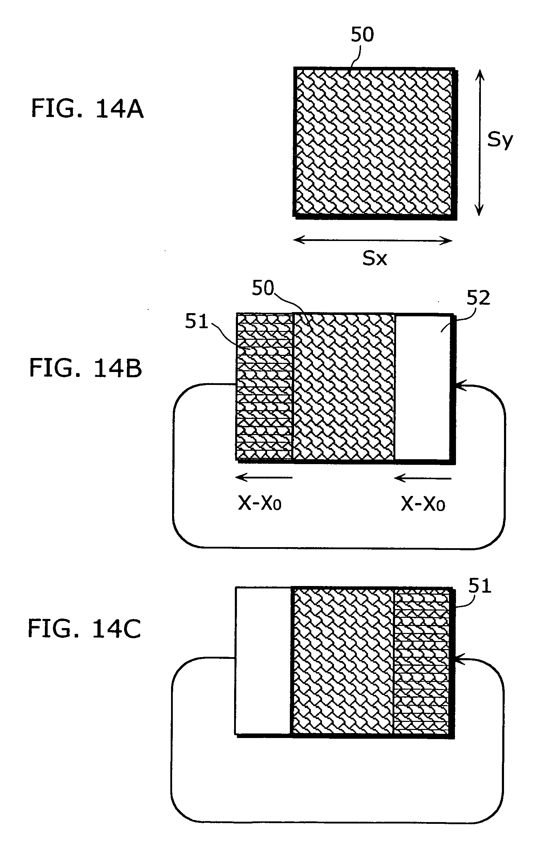

Also, for example, the following pattern can be determined: the representative pattern of the area 50 shown in FIG. 14A is shifted to the left as a modification pattern as shown in FIG. 14B, and the area 51 that has left the area 50 is moved to the area 52 that has become vacant as shown in FIG. 14C. In this case, the shift amount may be determined by generating a random number.

The modification pattern selection unit 233 notifies the modification unit 232 of the modification pattern from which a prohibited pattern is excluded, among modification patterns notified by the random number generation unit 234, in the case where the prohibited pattern is specified as additional information. On the other hand, in the case where a permitted pattern is specified as additional pattern, the modification pattern selection unit 233 notifies the modification unit 232 of only permitted patterns among modification patterns notified by the random number generation unit 234. Also, in the case where neither a permitted pattern nor a prohibited pattern is specified as additional information, all the modification patterns notified by the random number generation unit 234 are notified to the modification unit 232.

The modification unit 232 generates a superimposition pattern by modifying the decoded representative pattern according to the modification pattern notified by the modification pattern selection unit 233.

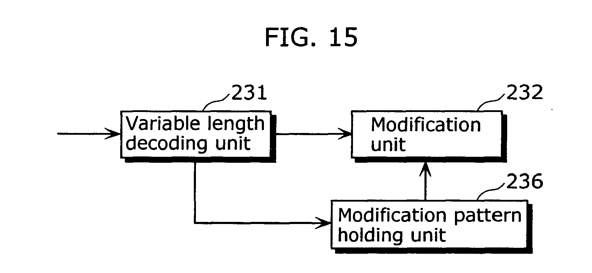

FIG. 15 is a block diagram showing the second structural example of the film grain preparation unit 230.

The film grain preparation unit 230 includes a variable length decoding unit 231, a modification unit 232, and a modification pattern holding unit 236. Note that the variable length decoding unit 231 and the modification unit 232 are the same as the ones shown in FIG. 12.

The modification pattern holding unit 236 holds the modification pattern that has been previously set. As for this modification pattern, in the case of the example shown in FIG. 13, the modification pattern and the order of the modification pattern are held. Also, in the case of the example shown in FIG. 14, the shift amount and the order of shifting by the shift amount are held.

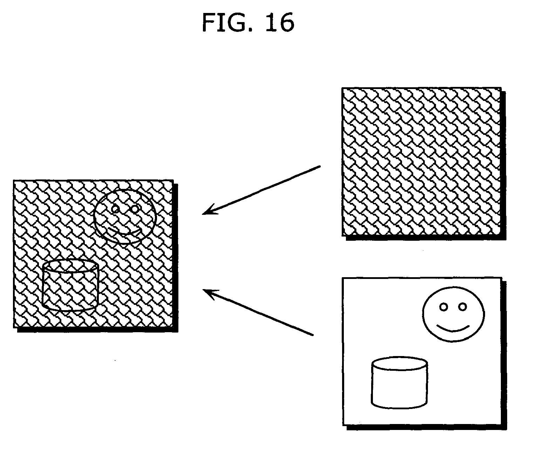

The synthesizing unit 240 synthesizes the decoded image data outputted from the decoding unit 210 with the superimposition pattern outputted by the film grain preparation unit 230 as shown in FIG. 16.

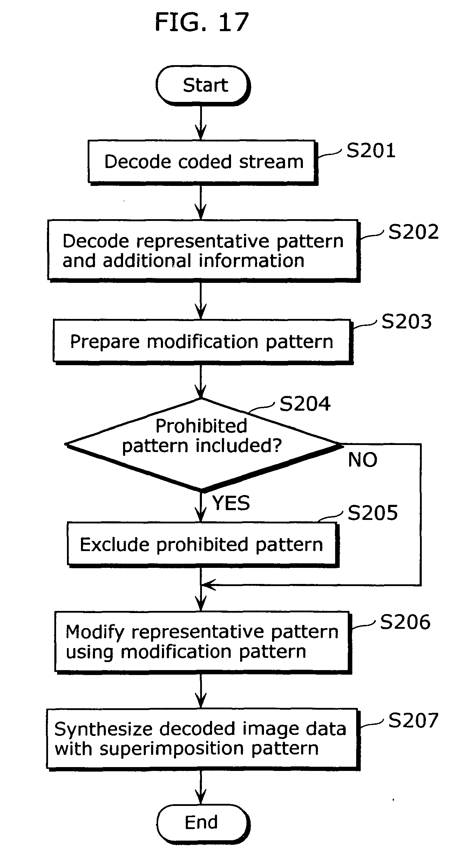

Next, the operation performed by the moving picture decoding apparatus structured like above will be described. Here will be described the case where the film grain preparation unit 230 is the first structural example. FIG. 17 is a flow chart showing the operation of the moving picture decoding apparatus in this case.

Also, the decoding unit 210 decodes the coded stream sent from the moving picture coding apparatus 100 (Step 201). Also, the variable length decoding unit 231 of the film grain preparation unit 230 performs variable length decoding on the representative pattern and the additional information that have been coded by the moving picture coding apparatus 100 and sent (Step 202). Next, the random number generation unit 234 generates a modification pattern by generating a random number (Step 203).

The modification pattern selection unit 233 judges whether or not the prohibited pattern is specified as additional information (Step 204). In the case where a prohibited pattern is specified as the judgment, the modification pattern from which the prohibited pattern among the modification patterns notified by the random number generation unit 234 is notified to the modification unit 232 (Step 205). On the other hand, in the case where no prohibited pattern is specified, all the modification patterns notified by the random number generation unit 234 are notified to the modification unit 232. The modification unit 232 generates a superimposition pattern by modifying the decoded representative pattern according to the modification pattern notified by the modification pattern selection unit 233 (Step 206).

The synthesizing unit 240 synthesizes the decoded image data outputted by the decoding unit 210 with the superimposition pattern outputted by the film grain preparation unit 230 (Step 207).

As described up to this point, the moving picture coding apparatus 100 codes and sends the film grain components equivalent to at least one macro block as a representative pattern, separately from the coded stream in which inputted images are coded, and the moving picture decoding apparatus 200 superimposes a superimposition pattern generated based on the representative pattern on the decoded image data obtained by decoding a coded stream. Therefore, even in the case where inputted images are coded in a low bit rate, it is possible to improve the reproducibility by recovering the film grains. Also, since the number of representative patterns to be sent is few, the amount of additional information is also little. Further, making variations of such representative patterns using various ways where random numbers are used makes it possible to generate film grain components that are visually natural.

Note that the random number generation unit 234 may be the structure for obtaining, for example, the picture numbers or time information on the pictures to be decoded from the decoding unit 210, and using them as initial values (seeds) of a random function. In this case, random number generation patterns become the same because the same initial values (seeds) of a random function are used for the same pictures in each reproduction. The same superimposition pattern is generated for each reproduction in this way, and thus it is possible to prevent the superimposition patterns superimposed on the decoded image data from being changed.

### (Second Embodiment)

This embodiment will describe the case where only a part of macro blocks, among the pictures to be coded, are coded with high quality instead of coding representative patterns separately.

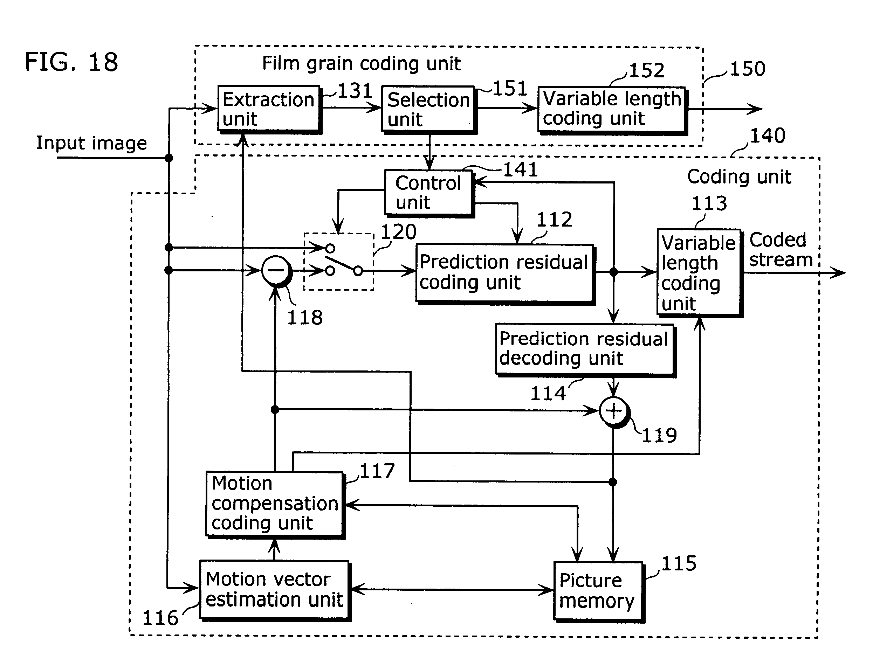

FIG. 18 is a block diagram showing the structure of the coding unit 140 and the film grain coding unit 150 of the moving picture coding apparatus in the second embodiment of the present invention. Note that the same parts as the ones in the first embodiment are assigned the same reference numbers, and the descriptions of them will be omitted.

This embodiment differs from the first embodiment in the operations performed by (a) the control unit 141 of the coding unit 140, and (b) the selection unit 151 of the film grain coding unit 150 and the variable length coding unit 152.

The selection unit 151 of the film grain coding unit 150 notifies the variable length coding unit 152 and the control unit 141 of the coding unit 140, of the position information of the macro block selected like in the first embodiment. The variable length coding unit 152 performs variable length coding of the position information of the selected macro block.

The control unit 141 instructs the prediction residual coding unit 112 (a) to set the quantization parameter of the macro block specified by the notified position information lower than the quantization parameter of the other blocks of the picture to be coded (for example, sets the quantization parameter at 0) or (b) to code the macro block again using a predetermined quantization parameter (for example, the smallest quantization parameter). The prediction residual coding unit 112 performs coding processing using the specified quantization parameter, and generates coded data.

In this way, only the macro blocks specified by the position information in the pictures to be coded are coded with high quality and without damaging film grains.

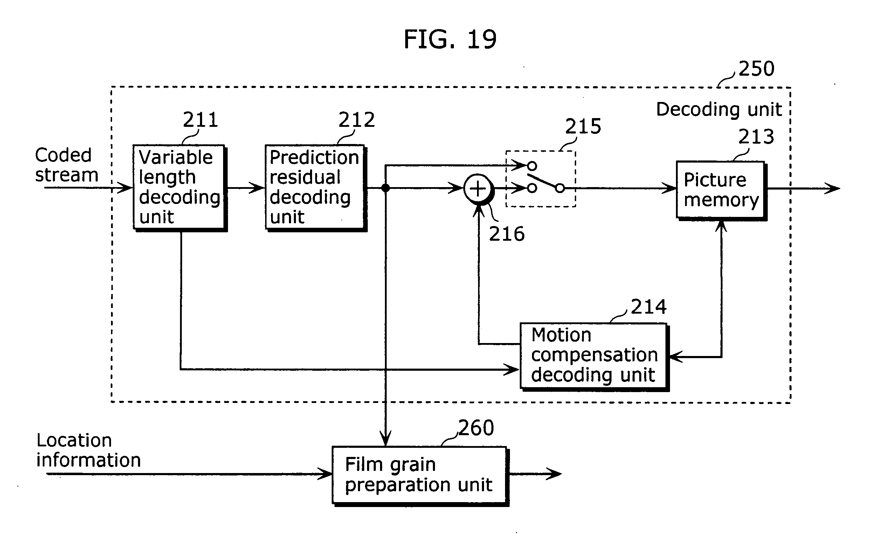

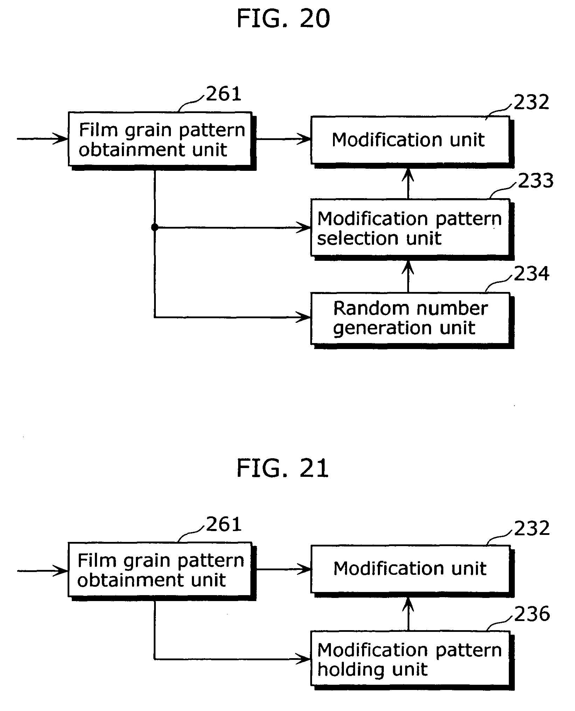

FIG. 19 is a block diagram showing the structure of the decoding unit 250 of the moving picture decoding apparatus in the second embodiment of the present invention. FIG. 20 is a block diagram showing the first structural example of the film grain preparation unit 260. FIG. 21 is a block diagram showing the second structural example of the film grain preparation unit 260. Note that the same parts as the ones in the first embodiment are assigned the same reference numbers and the descriptions of them will be omitted.

In the embodiment, the prediction residual coded data generated by the prediction residual decoding unit 212 of the decoding unit 250 are inputted also to the film grain preparation unit 260.

The film grain preparation unit 260 includes a film grain pattern obtainment unit 261 instead of the variable length decoding unit 231 of the first embodiment.

The film grain pattern obtainment unit 261 decodes the position information sent by the moving picture coding apparatus. Also, the film grain pattern obtainment unit 261 calculates the prediction residual coded data of the macro block specified by the position information and the differential between the macro block and another macro block referred to by the macro block, and outputs the differential as a representative pattern to the modification unit 232. In other words, since the macro block specified by the position information has coded with high quality, calculating the differential between the macro block and another macro block referred to by the macro block makes it possible to extract the same components as in the case of the representative pattern in the first embodiment.

As described up to this point, only a part of the macro blocks in the pictures to be coded are coded with high quality, and extracting the same components as the case of the representative pattern in the first embodiment makes it possible to improve the reproducibility by recovering film grains, even in the case where the inputted images are coded in a low bit rate like in the first embodiment. Also, there is a merit that decoding that enables recovering film grains can be realized in a single coded stream, with this embodiment.

### (Third Embodiment)

The above-described first and second embodiments have described film grain components, but this embodiment will describe the case of processing high-definition components included in fine images and the like having parts where a lot of high-frequency components are included. Since such film grain components are high-definition components, the same method is applicable for the high-frequency components except the film grain components.

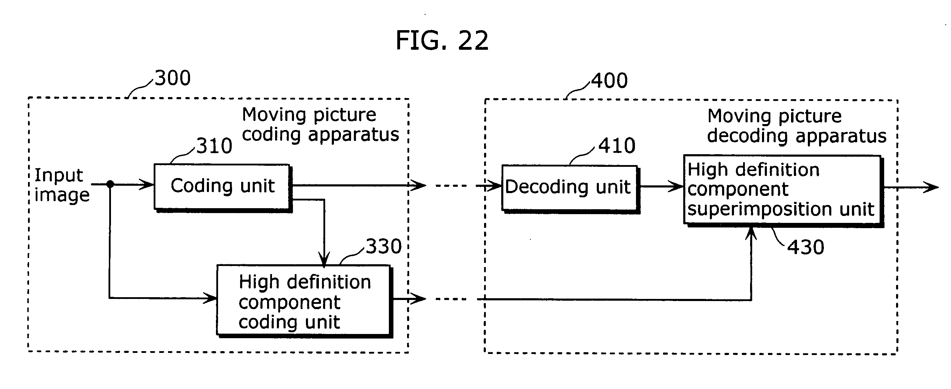

FIG. 22 is a block diagram showing the overall configuration of a moving picture coding apparatus and a moving picture decoding apparatus that use the moving picture coding method and the moving picture decoding method in a third embodiment of the present invention.

The moving picture coding apparatus 300 is for coding high-definition components separately from the main images, and includes a coding unit 310 and a high-definition coding unit 330 as shown in FIG.22. On the other hand, the moving picture decoding apparatus 400 is for superimposing such high-definition components on the decoded images, and includes a decoding unit 410, a high-definition component decoding unit 420, and a high-definition component superimposition unit 430 as shown in FIG. 22.

The coding unit 310 of the moving picture coding apparatus 300 and the high-definition component coding unit 330 have the same structures as in the first embodiment respectively. This embodiment differs in that superimposing position information on the representative pattern and the gain information are specified as additional information, in the block selection unit 1324 of the selection unit 132 of the high-definition coding unit 330, the representative pattern being the high-definition components to be outputted. This gain information is for specifying, for example, by what times the pixel values of the representative pattern is multiplexed in superimposition.

The decoding unit 410 of the moving picture decoding apparatus 400 has the same structure as the decoding unit 210 in the first embodiment. Also, the high-definition component decoding unit 420 and the high-definition component superimposition unit 430 of the moving picture decoding apparatus 400 perform the same operations as the ones that the film grain preparation unit 230 and the synthesizing unit 240 do in the first embodiment. This embodiment differs in that the values obtained by multiplexing the pixel values of the representative pattern by several times based on the gain information specified like described above, and the values are superimposed on the superimposing position specified like described above of the decoded image data decoded by the decoding unit 210.

As described up to this point, since the representative pattern that is the high-definition components is superimposed on only a predetermined position by specifying the position, it is possible to improve the reproducibility by recovering the high-definition components included in fine images and the like having parts where a lot of high-frequency components are included, even in the case where inputted images are coded in a low bit rate.

### (Fourth Embodiment)

In the above-described third embodiment, position information for superimposing a representative pattern is sent by the moving picture coding apparatus, but in this embodiment, the case where the moving picture decoding apparatus determines a superimposing position will be described.

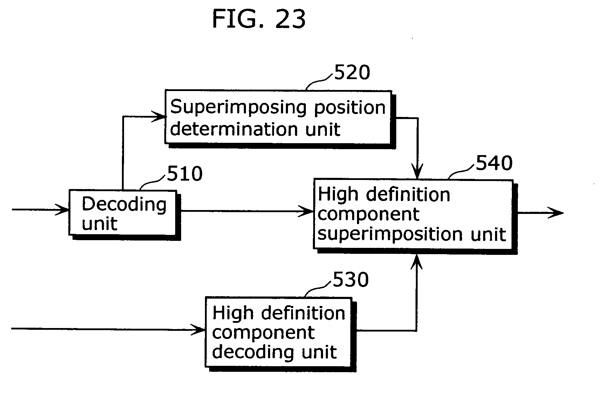

FIG. 23 is a block diagram showing the structure of the moving picture decoding apparatus in the fourth embodiment of the present invention.

The moving picture decoding apparatus of this embodiment includes a superimposing position determination unit 520 in addition to the structure of the third embodiment.

The superimposing position determination unit 520 determines the superimposition position for superimposing the representative pattern on the decoded image data decoded by the decoding unit 210. The superimposing position determination unit 520 judges that there are high-frequency components in the case where a single non-0 coefficient transformed using, for example, DCT (discrete cosine transform) is included in a predetermined range of a macro block, and determines that the representative pattern is superimposed on the macro block. Note that the judgment that there are high-frequency components is not always made according to the above condition, it may be judged that there are high-frequency components in the case where, for example, "n" numbers of non-0 coefficients are included in a predetermined range of macro blocks. Also, it may be judged that high-frequency components are included in macro blocks whose absolute value total of the respective coefficients is a predetermined value or more.

As described up to this point, since the moving picture decoding apparatus side superimposes a representative pattern that is the high-definition components on only the predetermined position by specifying the superimposing position, it is possible to improve the reproducibility by recovering the high-definition components included in fine images and the like having parts where a lot of high-frequency components are included, even in the case where inputted images are coded in a low bit rate. Also, there is no need to send such superimposition information from the moving picture coding apparatus to the moving picture decoding apparatus.

### (Fifth Embodiment)

Further, recording, on a recording medium such as a flexible disc, a program for realizing the moving picture coding method and the moving picture decoding method shown in the above-described first embodiment makes it possible to cause an independant computer to execute the processing shown in the first embodiment easily.

FIG. 24 is an illustration in the case where the moving picture coding method and the moving picture decoding method in the above-described first embodiment that are stored in a flexible disc are executed by a computer system.

FIG. 24B is an illustration of the front view and the side view of the case of the flexible disc and the front view of the flexible disc body, and FIG. 24A is an illustration showing an example of a physical format of a flexible disc that is a recording medium.

A flexible disc (FD) is contained in a case F, a plurality of tracks (Tr) are formed concentrically on the surface of the disc from the periphery into the inner radius of the disc, and each track is segmented into 16 sectors (Se) in the angular direction. Therefore, in the case of the flexible disc storing the above-described program, the moving picture coding method as the program is recorded in an area allocated for it on the flexible disc (FD). Also, FIG. 24C shows the structure for recording and reproducing the program on the flexible disc (FD). In the case where the program is recorded on the flexible disc (FD), the computer system (Cs) writes the moving picture coding method or the moving picture decoding method as the program by the computer system Cs. Also, in the case where the moving picture coding method described above is constructed in the computer system by the program on the flexible disc, the program is read out from the flexible disc through a flexible disc drive and transferred to the computer system.

Note that the above description has described a flexible disc as recording medium, but such description may describe an optical disc. Also, such a recording medium is not limited to this, and such description may also describe an IC card, a ROM cassette and the like as long as it is a medium for recording the program.

Further, an application example of the moving picture coding method and the moving picture decoding method shown in the above-described embodiments and the system where they are used will be described here.

FIG. 25 is an illustration showing the overall configuration of the content supply system ex100 that realizes a content distribution service. The area for providing communication service is segmented into cells of desired sizes, and cell sites ex107 to ex110 of fixed wireless stations are placed in the cells respectively. This content supply system ex100 is connected to each apparatus such as a computer ex111, a Personal Digital Assistant (PDA) ex112, a camera ex113, a mobile phone ex114 and a mobile phone with a camera ex115 via, for example, a combination of the Internet ex101, an Internet service provider ex102, a telephone network ex104 and cell sites ex107 to ex110.

However, the content supply system ex100 is not limited to the configuration as shown in FIG. 25, and may be connected to a combination of any of them. Also, each apparatus can be connected directly to the telephone network ex104, not through the cell sites as fixed radio stations ex107 to ex110.

The camera ex113 is an apparatus capable of shooting video (moving pictures) such as a digital video camera. The mobile phone may be a mobile phone of a Personal Digital Communications (PDC) system, a Code Division Multiple Access (CDMA) system, a Wideband-Code Division Multiple Access (W-CDMA) system or a Global System for Mobile Communications (GSM) system, a Personal Handy-phone system (PHS) or the like.

A streaming server ex103 is connected to the camera ex113 via the cell site ex109 and the telephone network ex104, which enables live distribution or the like using the camera ex113 based on the coded data transmitted from the user. Either the camera ex113 or the server for transmitting the data can code the shot data. Also, the moving picture data shot by a camera ex116 can be transmitted to the streaming server ex103 via the computer ex111. The camera ex116 is an apparatus such as a digital camera that is capable of shooting still and moving pictures. In this case, either the camera ex116 or the computer ex111 may perform coding of the moving picture data. Also, in the computer ex111 or in an LSI ex117 included in the camera ex116, the coding processing is performed. Note that software for coding and decoding moving pictures may be integrated into any type of recording media (such as a CD-ROM, a flexible disc, a hard disc and the like) that is a recording medium which is readable by the computer ex111 or the like. Furthermore, a mobile phone with a camera ex115 may transmit the moving picture data. This moving picture data is the data coded by the LSI included in the mobile phone ex115.

The content supply system ex100 codes contents (such as a music live video) shot by users using the camera ex113, the camera ex116 or the like in the same manner as the above-described embodiments and transmits them to the streaming server ex103. Meanwhile, the streaming server ex103 makes stream distribution of the contents data to the clients upon their request. The clients include the computer ex111, the PDA ex112, the camera ex113, the mobile phone ex114 and so on that are capable of decoding the above-described coded data. In this way, the content supply system ex100 enables the clients to receive and reproduce the coded data, and further to receive, decode and reproduce the data in real time so as to realize personal broadcasting.

The moving picture coding apparatus or the moving picture decoding apparatus shown in the above-described embodiments may be used in coding and decoding performed by the respective apparatuses that constitute this system.

A mobile phone will be described as an example.

FIG. 26 is a diagram showing the mobile phone ex115 using the moving picture coding method and the moving picture decoding method described in the earlier embodiments. The mobile phone ex115 has an antenna ex201 for communicating with the cell site ex110 via radio waves, a camera unit ex203 such as a CCD camera that is capable of shooting moving and still pictures, a display unit ex202 such as a liquid crystal display that displays the data obtained by decoding moving pictures and the like received via the antenna ex201, a body unit including a set of operation keys ex204, a sound output unit ex208 such as a speaker for outputting sound, a sound input unit 205 such as a microphone for inputting sound, a recording medium ex207 for storing coded or decoded data such as data of moving or still pictures, data of received e-mail and data of moving or still pictures, and a slot unit ex206 operable to attach the recording medium ex207 to the mobile phone ex115. The storage medium ex207 is equipped with a flash memory element, a kind of Electrically Erasable and Programmable Read Only Memory (EEPROM) that is an electrically erasable and rewritable nonvolatile memory such as an SD card in a plastic case.

Further, the mobile phone ex115 will be described with reference to FIG. 27. In the mobile phone ex115, a main control unit ex311, which is operable to perform centralized control on each unit of the body including the display unit ex202 and operation keys ex204, is connected to a power supply circuit unit ex310, an operation input control unit ex304, a picture coding unit ex312, a camera interface unit ex303, a Liquid Crystal Display (LCD) control unit ex302, a picture decoding unit ex309, a multiplexing/demultiplexing unit ex308, a recording and reproducing unit ex307, a modem circuit unit ex306 and a sound processing unit ex305 via a synchronous bus ex313.

When a call-end key or a power key is turned ON by a user's operation, the power supply circuit unit ex310 supplies respective units with power from a battery pack so as to activate the digital mobile phone with a camera ex115 for making it into a ready state.

In the cell phone ex115, the sound processing unit ex305 converts the sound signals received by the sound input unit ex205 in conversation mode into digital sound data under the control of the main control unit ex311 including a CPU, a ROM and a RAM. The modem circuit unit ex306 performs spread spectrum processing of the digital sound data, and the transmission circuit unit ex301 performs digital-to-analog conversion and frequency transform processing of the data so as to transmit it via the antenna ex201. Also, in the mobile phone ex115, the transmission circuit unit ex301 amplifies the data received by the antenna ex201 in conversation mode and performs frequency transform processing and analog-to-digital conversion processing on the data. The modem circuit unit ex306 performs inverse spread spectrum processing on the data, the sound processing unit ex305 converts it into analog sound data, and the sound output unit ex208 outputs it.

Furthermore, when transmitting e-mail in data communication mode, the text data of the e-mail inputted by operating the operation keys ex204 on the body unit is sent out to the main control unit ex311 via the operation input control unit ex304. In the main control unit ex311, after the modem circuit unit ex306 performs spread spectrum processing on the text data and the transmission circuit unit ex301 performs digital-to-analog conversion processing and frequency transform processing on it, the data is transmitted to the cell site ex110 via the antenna ex201.

When picture data is transmitted in data communication mode, the picture data shot by the camera unit ex203 is supplied to the picture coding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture coding unit ex312, which includes the moving picture coding apparatus that have been described in the present invention, performs compression coding on the picture data supplied from the camera unit ex203 using the coding method used for the moving picture coding apparatus that have been shown in this application of the present invention so as to convert it into coded picture data, and sends it out to the multiplexing/demultiplexing unit ex308.

The multiplexing/demultiplexing unit ex308 multiplexes the coded picture data supplied from the picture coding unit ex312 and the sound data supplied from the sound processing unit ex305 using a predetermined method, the modem circuit unit ex306 performs spread spectrum processing on the multiplexed data obtained as a result of the multiplexing, and the transmission circuit unit ex301 performs digital-to-analog conversion and frequency transform processing on the data for transmitting via the antenna ex201.

As for receiving data of a moving picture file which is linked to a Web page or the like in data communication mode, the modem circuit unit ex306 performs spread spectrum processing of the data received from the cell site ex110 via the antenna ex201, and sends out the multiplexed data obtained as a result of the processing to the multiplexing/demultiplexing unit ex308.

In order to decode the multiplexed data received via the antenna ex201, the multiplexing/demultiplexing unit ex308 separates the multiplexed data into a bit stream of picture data and a bit stream of sound data, and supplies the current coded picture data to the picture decoding unit ex309 and the current sound data to the sound processing unit ex305 respectively via the synchronous bus ex313.

Next, the picture decoding unit ex309, which includes the moving picture decoding apparatus that have been described in this application of the present invention, decodes the bit stream of picture data using the decoding method corresponding to the coding method as shown in the above-described embodiments to generate reproduced moving picture data, and supplies this data to the display unit ex202 via the LCD control unit ex302, and thus, for instance, the moving picture data included in a moving picture file linked to a Web page is displayed. At the same time, the sound processing unit ex305 converts the sound data into analog sound data, and supplies this data to the sound output unit ex208, and thus, for instance, sound data included in a moving picture file linked to a Web page is reproduced.

Note that the present invention is not limited to the above-described system, and at least either the moving picture coding apparatus or the moving picture decoding apparatus in the above-described embodiments can be incorporated into a system for digital broadcasting as shown in FIG. 28. Such ground-based or satellite digital broadcasting has been in the news lately. More specifically, a bit stream of video information is transmitted from a broadcast station ex409 to a communication or a broadcast satellite ex410 via radio waves. Upon receipt of it, the broadcast satellite ex410 transmits radio waves for broadcasting, a home-use antenna ex406 with a satellite broadcast reception function receives the radio waves, and a television (receiver) ex401, a set top box (STB) ex407 or the like decodes and reproduces the bit stream. The moving picture decoding apparatus described in the above embodiments can be implemented in the reproduction apparatus ex403 for reading out and decoding the bit stream recorded on a storage medium ex402 that is a recording medium such as a CD and a DVD. In this case, the reproduced video signals are displayed on a monitor ex404. It is also conceived to implement the moving picture decoding apparatus in the set top box ex407 connected to a cable ex405 for a cable television or the antenna ex406 for satellite and/or ground-based broadcasting so as to reproduce them on a monitor ex408 of the television. The moving picture decoding apparatus may be incorporated into the television, in stead of in the set top box. Otherwise, a car ex412 having an antenna ex411 can receive signals from the satellite ex410, the cell site ex107 or the like for reproducing moving pictures on a display apparatus such as a car navigation system ex413.

Furthermore, the moving picture coding apparatus described in the above embodiments can code picture signals for recording them on a recording medium. As a concrete example, there is a recorder ex420 such as a DVD recorder for recording picture signals on a DVD disc ex421 and a disc recorder for recording them on a hard disc. They can also be recorded on an SD card ex422. If the recorder ex420 includes the moving picture decoding apparatus described in the above embodiment, the picture signals recorded on the DVD disc ex421 or the SD card ex422 can be reproduced for display on the monitor ex408.

Note that a conceivable configuration of the car navigation system ex413 is the configuration obtained by eliminating the camera unit ex203, the camera interface unit ex303 and the picture coding unit ex312 from the existing components in FIG. 27. The same goes for the computer ex111, the television (receiver) ex401 and the like.

In addition, three types of implementation can be conceived for a terminal such as the above-described cell phone ex114, a sending/receiving terminal implemented with both an encoder and a decoder, a sending terminal implemented with an encoder only, and a receiving terminal implemented with a decoder only.

In this way, it is possible to use the moving picture coding apparatus or the moving picture decoding apparatus in the above-described embodiments in any of the above-described apparatuses and systems, and by using this method, the effects described in the above embodiments can be obtained.

The present invention is not limited to the above-described embodiments, and it will be obvious that the embodiments of the invention may be varied in many ways.

Note that the respective functional blocks of the respective embodiments are typically realized as an LSI that is a large scale integration circuit. Each functional blocks may be made into a single chip, or a part of or all of the functional blocks may be made into a single chip all together (for example, functional blocks except a memory may be made into a single chip).

The integrated circuit is called LSI here, but it may be called IC, system LSI, super LSI, or ultra LSI, depending on the integration degree.

Also, the method of making them into an integrated circuit is not limited to the method of making them into an LSI, it may be realized by an exclusive circuit or a multi-purpose processor. Also, it is possible to use (a) a reconfigurable processor where the connection or the setting of circuit cells can be reconfigured or (b) a programmable FPGA (Field Programmable Gate Array), after making them into an LSI.

Further, in the case where technique of making them into an integrated circuit instead of making them into an LSI appears when the semiconductor technique is further developed or any derivative technique appears, in due course, functional blocks may be made into an integrated circuit using such new technique. Application of bio technique is likely.

Also, among respective functional blocks a storage unit (a picture memory) in which the picture data to be coded or decoded is stored may be configured separately instead of being included in a single chip.

### Industrial Applicability

As described up to this point, the moving picture coding method and a moving picture decoding method in the present invention are applicable as methods for (a) generating a coded stream by coding pictures constituting a moving picture using, for example, a mobile phone, a DVD apparatus, a personal computer and the like, and (b) decoding the generated coded stream.

## Claims

1. A moving picture coding method for coding each picture constituting a moving picture on a block-by-block basis, comprising:
a first coding step of coding a current picture to be coded;
an extraction step of extracting high-definition components from the current picture to be coded; and
a selection step of selecting high-definition components equivalent to at least one block, from the high-definition components extracted in said extraction step.

2. The moving picture coding method according to Claim 1, further comprising
a second coding step for coding the high-definition components equivalent to the at least one block, the high-definition components being selected in said selection step.

3. The moving picture coding method according to Claim 2,
wherein, in said second coding step, a value of each high-definition component is coded.

4. The moving picture coding method according to Claim 2,
wherein, in said second coding step, each high-definition component is transformed into coefficients indicating spatial frequency components, and the coefficients are coded.

5. The moving picture coding method according to Claim 1,
wherein, in said first coding step, the at least one block which is selected in said selection step is coded again by any of (a) setting a quantization parameter of the at least one block which is selected in said selection step, the quantization parameter being lower than quantization parameters of other blocks of the current picture to be coded and (b) using a predetermined quantization parameter.

6. The moving picture coding method according to Claim 1,
wherein, in said extraction step, the high-definition components are extracted by calculating a differential between the current picture to be coded and a decoded picture obtained by decoding the current picture after being coded.

7. The moving picture coding method according to Claim 1,
wherein, in said selection step, the high-definition components equivalent to the at least one block are selected on the picture-by-picture basis, the picture being the current picture to be coded.

8. The moving picture coding method according to Claim 1,
wherein, in said selection step, each variance of the high-definition components is calculated on the block-by-block basis, the high-definition components being extracted in said extraction step, and the high-definition components equivalent to the at least one block are selected based on each calculated variance.

9. The moving picture coding method according to Claim 8,
wherein, in said selection step, the high-definition components of a block are selected, the block having a variance which is indicated by a frequency peak in a histogram of the calculated variances.

10. The moving picture coding method according to Claim 8,
wherein, in said selection step, the high-definition components of a block are selected, the block having a calculated variance which is equal to a predetermined variance.

11. The moving picture coding method according to Claim 1,
wherein, in said selection step, the following each median is calculated: the median being of pixels of a corresponding positions of blocks which include the high-definition components extracted in said extraction step, and the calculated median is selected as the high-definition components for one block.

12. The moving picture coding method according to Claim 1,
wherein, in said selection step, additional information is assigned to the selected high-definition components.

13. The moving picture coding method according to Claim 12,
wherein, in said selection step, any of a permitted pattern in superimposition and a prohibited pattern in superimposition of the selected high-definition components is specified as the additional information on the picture-by-picture basis.

14. The moving picture coding method according to Claim 12,
wherein, in said selection step, any of a permitted pattern in superimposition and a prohibited pattern in superimposition of the selected high-definition components is specified as the additional information on the high-definition component basis.

15. The moving picture coding method according to Claim 12,
wherein, in said selection step, a superimposing position in superimposition of the selected high-definition components are specified as the additional information.

16. The moving picture coding method according to Claim 12,
wherein, in said selection step, a gain in superimposition of the selected high-definition components is specified as the additional information.

17. The moving picture decoding method for decoding a coded stream obtained by coding each constituent picture on a block-by-block basis, comprising:
a first decoding step of generating decoded picture data by decoding the coded stream;
an obtainment step of obtaining high-definition components equivalent to the at least one block; and
a superimposition step of superimposing the high-definition components equivalent to the at least one block on the decoded picture data, the high-definition components being obtained in said obtainment step.

18. The moving picture decoding method according to Claim 17, further comprising
a modification step of modifying the high-definition components equivalent to the at least one block, the high-definition components being obtained in said obtainment step,
wherein, in said superimposition step, the high-definition components modified in said modification step is superimposed on the decoded picture data.

19. The moving picture decoding method according to Claim 18, further comprising
a pattern preparation step of preparing a modification pattern indicating what modification of the high-definition components equivalent to the at least one block is made, the high-definition components being obtained in said obtainment step,
wherein, in said modification step, the high-definition components are modified based on the modification pattern.

20. The moving picture decoding method according to Claim 19,
wherein, in said pattern preparation step, the at least one of the following modification patterns is prepared: rotation; reversal; level changing; and position shifting.

21. The moving picture decoding method according to Claim 19,
wherein, in said pattern preparation step, the modification pattern is prepared at random based on a random function.

22. The moving picture decoding method according to Claim 21,
wherein, in said pattern preparation step, the modification pattern is prepared on the premise that an initial value of the random function is constant.

23. The moving picture decoding method according to Claim 21,
wherein, in said pattern preparation step, an initial value of the random function is obtained from the coded stream.

24. The moving picture decoding method according to Claim 21,
wherein, in said obtainment step, initial information is further obtained, and
in said pattern preparation step, the modification pattern is prepared, setting the initial information as an initial value of the random function, the initial information being obtained in said obtainment step.

25. The moving picture decoding method according to Claim 19,
wherein, in said pattern preparation step, a predetermined modification pattern and an order of the modification pattern are previously held.

26. The moving picture decoding method according to Claim 19,
wherein, in said obtainment step, a prohibited pattern is further obtained, and
in said modification step, the high-definition components are modified based on a modification pattern excluding the prohibited pattern from the modification patterns.

27. The moving picture decoding method according to Claim 17, further comprising
a superimposing position obtainment step of obtaining a superimposing position,
wherein, in said superimposition step, the high-definition components are superimposed on the superimposing position of the decoded picture data, the superimposing position being obtained in said superimposing position obtainment step.

28. The moving picture decoding method according to Claim 27,
wherein, in said superimposing position obtainment step, the superimposing position being obtained based on the coded stream.

29. A moving picture coding apparatus which codes each picture constituting a moving picture on a block-by-block basis, comprising:
a first coding unit operable to code a current picture to be coded;
an extraction unit operable to extract high-definition components from the current picture to be coded; and
a selection unit operable to select the high-definition components equivalent to at least one block, from the high-definition components extracted by said extraction unit.

30. A moving picture decoding apparatus which decodes a coded stream obtained by coding each constituent picture on a block-by-block basis, comprising:
a first decoding unit operable to generate decoded picture data by decoding the coded stream;
an obtainment unit operable to obtain high-definition components equivalent to at least one block; and
a superimposition unit operable to superimpose the high-definition components equivalent to the at least one block on the decoded picture data, the high-definition components being obtained by said obtainment unit.

31. A program for causing a computer to execute coding of each picture constituting a moving picture on a block-by-block basis, the coding comprising:
a first coding step of coding a current picture to be coded;
an extraction step of extracting high-definition components from the current picture to be coded; and
a selection step of selecting the high-definition components equivalent to at least one block, from the high-definition components extracted in said extraction step.

32. A program for causing a computer to execute decoding of a coded stream obtained by coding each constituent picture on a block-by-block basis, the decoding comprising:
a first decoding step of generating decoded picture data by decoding the coded stream;
an obtainment step of obtaining high-definition components equivalent to the at least one block; and
a superimposition step of superimposing the high-definition components equivalent to the at least one block on the decoded picture data, the high-definition components being obtained in said obtainment step.

33. An integrated circuit for coding each picture constituting a moving picture on a block-by-block basis, comprising:
a first coding unit operable to code a current picture to be coded;
an extraction unit operable to extract high-definition components from the current picture to be coded; and
a selection unit operable to select the high-definition components equivalent to at least one block, from the high-definition components extracted by said extraction unit.

34. An integrated circuit for decoding a coded stream obtained by coding each constituent picture on a block-by-block basis, comprising:
a first decoding unit operable to generate decoded picture data by decoding the coded stream;
an obtainment unit operable to obtain high-definition components equivalent to at least one block; and
a superimposition unit operable to superimpose the high-definition components equivalent to the at least one block on the decoded picture data, the high-definition components being obtained by said obtainment unit.

35. A coded stream including high-definition components equivalent to at least one block, the high-definition components to be superimposed on decoded picture data obtained by decoding a coded stream whose constituent pictures are coded on a block-by-block basis.
